# EUROPÄISCHE PATENTSCHRIFT

(11) **EP 3 821 973 B1**
(45) Veröffentlichungstag und Bekanntmachung des Hinweises auf die Patenterteilung: **04.01.2023**
(21) Anmeldenummer: 19020633.4
(22) Anmeldetag: 13.11.2019
(51) Int. Cl.: B01J 8/06, C01B 3/38, F23J 11/02

(54) **REFORMEROFEN ZUR DURCHFÜHRUNG EINES ENDOTHERMEN PROZESSES**
REFORMER FURNACE FOR CARRYING OUT AN ENDOTHERMIC PROCESS
FOUR DE REFORMAGE PERMETTANT DE METTRE EN UVRE UN PROCESSUS ENDOTHERMIQUE

(43) Veröffentlichungstag der Anmeldung: 19.05.2021
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Coscia, Antonio, 65589 Hadamar (DE)
(74) Vertreter: Stang, Stefan

(56) Entgegenhaltungen:
- EP-A1- 3 153 464
- WO-A1-2013/087194
- GB-A- 1 192 688

## Beschreibung

### Technisches Gebiet der Erfindung

Die Erfindung betrifft einen Reformerofen zur Durchführung eines endothermen Prozesses. Die Erfindung betrifft ferner die Verwendung des erfindungsgemäßen Reformerofens zur Herstellung von Synthesegas aus einem kohlenstoffhaltigen Einsatzstoff.

### Stand der Technik

Reformeröfen zur katalytischen Reformierung von kohlenstoffhaltigen Einsatzstoffen mit Wasserdampf sind in einer Vielzahl von Ausführungsformen bekannt. Ein bekanntes Beispiel für einen Reformerofen zur katalytischen Reformierung von kohlenstoffhaltigen Einsatzstoffen ist der Dampfreformer zur Reformierung von Erdgas und Wasserdampf zur Erzeugung von Synthesegas, einer Mischung aus Kohlenmonoxid und Wasserstoff sowie regelmäßig auch unerwünschten Begleitstoffen wie beispielsweise Kohlendioxid. Solche Reformierungsprozesse verlaufen endotherm und langsam, so dass zur Umsetzung des kohlenstoffhaltigen Einsatzstoffes mit Wasserdampf eine externe Befeuerungsquelle zum Erhitzen der Katalysator befüllten Reaktionsrohre des Reformerofens erforderlich ist.

Bei Anlagen im industriellen Großmaßstab hat sich eine Bauform durchgesetzt, bei der ein im wesentlichen kastenförmiger Ofen mit senkrecht stehenden Reaktionsrohren zum Einsatz kommt. Der Innenraum der Gesamtheit der Reaktionsrohre bildet den Reaktionsraum des Reformerofens. Dabei sind die Reaktionsrohre in einer oder mehreren nebeneinanderstehenden Reihen angeordnet.

Jede Reaktionsrohrreihe wird üblicherweise durch zwei Brennerreihen befeuert, wobei eine Reaktionsrohrreihe mittig zwischen zwei parallel zu den Reaktionsrohrreihen verlaufenden Brennerreihen angeordnet ist, um eine gleichmäßige Befeuerung der Reaktionsrohre zu gewährleisten. Dabei werden wandständige Brennerreihen von nicht wandständigen Brennerreihen unterschieden. Bei den wandständigen Brennerreihen sind die Brenner zwischen einer Wand des Reformerofens und einer Reaktionsrohrreihe angeordnet. Bei einer nicht wandständigen Brennerreihe sind die Brenner zwischen zwei Reaktionsrohrreihen angeordnet.

Die Brenner sind innerhalb des sogenannten Befeuerungsraums des Reformerofens angeordnet. Die Eduktgaszuführung und die Produktgasabführung zu und von den Reaktionsrohren findet zwangsläufig außerhalb des Brennraums statt, so dass die Wandungen der Reaktionsrohre die räumliche Trennung zwischen dem Reaktionsraum und dem Befeuerungsraum definieren.

Die Brenner der Brennerreihen werden über Zuleitungen mit Luft und Brenngas versorgt und sind bei den häufigsten Bauformen entweder in der Decke oder im Boden des Reformerofens angeordnet, wobei die Flammen der Brenner entsprechend senkreicht nach unten zum Reformerofenboden gerichtet sind oder senkrecht nach oben zur Reformerofendecke gerichtet sind. Andere Anordnungen der Brenner, wie beispielsweise an den seitlichen Wänden des Reformerofens zur seitlichen Befeuerung, oder eine terrassenförmige Anordnung zur diagonalen Befeuerung, sind ebenfalls bekannt, kommen jedoch seltener zur Anwendung.

Das aus den Reaktionsrohren austretende Produktgas wird außerhalb des Befeuerungsraums in Sammelleitungen zusammengeführt und abgezogen. Dabei liegen die Gasaustrittstemperaturen bei 800 °C bis 900 °C und darüber. Die Temperaturen im Befeuerungsraum des Reformerofens liegen bei 1000 °C bis 1200 °C und darüber. Die Wände des Reformerofens sind dementsprechend mit einer feuerfesten Schutzschicht ausgekleidet.

Zum Abzug der durch die Brenner erzeugten Rauchgase kommen sogenannte Rauchgastunnel zum Einsatz, welche in Fluidverbindung zum Befeuerungsraum des Reformerofens stehen. Die Rauchgastunnel sind entweder innerhalb des Befeuerungsraums oder außerhalb, räumlich separiert vom Befeuerungsraum, angeordnet. Je nach Größe des Reformerofens verfügt dieser über einen oder eine Mehrzahl von Rauchgastunneln. Die Rauchgastunnel sind senkrecht zu den Reaktionsrohren und im Wesentlichen waagrecht zur Decke und zum Boden des Reformerofens, sowie parallel zu den Brennerreihen verlaufend angeordnet.

Ein typischer Reformerofen, ausgestaltet als Dampfreformer zur Erzeugung von Synthesegas, ist beispielsweise in der EP 3 153 465 A1 beschrieben. Die Rauchgaskanäle sind hier unterhalb des Befeuerungsraums und außerhalb, räumlich separiert vom Befeuerungsraum, angeordnet und weisen ein keilförmiges, sich in Strömungsrichtung der Brennerabgase hin aufweitendes Längsprofil auf. Da die Rauchgastunnel nur zu einer Seite hin zum Abzug der Brennerabgase geöffnet sind, trägt diese Ausgestaltung der über die Länge der Abgaskanäle kumulativ anwachsenden Abgasmenge Rechnung. Gleichzeitig können die Öffnungen zwischen den Rauchgaskanälen und dem Befeuerungsraum über die gesamte Kanallänge durchgehend ein sich in Strömungsrichtung verjüngendes Keilprofil aufweisen, um den Abzug der sich zur Rauchgaskanalöffnung hin vergrößernden Abgasmenge zu erleichtern. Dadurch wird eine gleichförmige Strömung im Rauchgaskanal ermöglicht, das heißt die Strömungsgeschwindigkeit des Rauchgases ist im Idealfall an jedem Punkt im Rauchgaskanal konstant. Die gleichförmige Strömung im Rauchgaskanal führt zu einer verbesserten Temperaturverteilung innerhalb des Befeuerungsraums und dadurch zu einer gleichmäßigeren Beheizung der Ofenrohre. Dadurch werden Temperaturspitzen vermieden, wodurch auch die Menge an unerwünschten Nebenprodukten bei der Umsetzung von kohlenstoffhaltigen Einsatzstoffen mit Dampf zurückgedrängt werden kann.

Nachteilig an dieser Lösung ist der hohe konstruktive Aufwand bei der Ausgestaltung des keilförmigen Rauchgaskanals und/oder der Öffnungen zwischen Rauchgaskanal und Befeuerungsraum.

Die EP 2 791 052 B1 offenbart einen transportablen Reformer, bei dem die Rauchgastunnel fest mit dem Befeuerungsraum verbunden sind und im Querschnitt eine U-Form, V-Form oder Trapez-Form aufweisen. Die Rauchgastunnel sind so angeordnet, dass die Öffnungen nach oben gerichtet sind, damit das im Befeuerungsraum entstehende Rauchgas in den Rauchgastunnel strömen kann, wobei die Öffnungen mit Rauchgaszugang versehenem Deckstein zugedeckt sind. Bei dem Rauchgaszugang der Decksteine handelt es sich um Formen von Schlitzen, Löchern, Drallkörpern oder Lücken zwischen den Decksteinen.

Nachteilig an dieser Lösung ist der aufwändige Einsatz von zusätzlichen Einbauten wie Decksteinen. Ferner wird der Abstand zwischen dem rauchgastunnelseitigen Ende des Befeuerungsraums und dem Rauchgastunnel selbst lediglich durch die mit Schlitze, Löcher, Drallkörper oder Lücken versehenen Decksteine definiert. Dadurch sind der Befeuerungsraum und der Rauchgaskanal hydraulisch nicht voneinander entkoppelt, wodurch eine ungleichförmige Strömung an Brennerabgasen in den Rauchgaskanälen resultiert. Dies führt zu den vorgenannten Problemen, insbesondere einer ungleichmäßigen Befeuerung der Reaktionsrohre. Ferner sind die Decksteine üblicherweise aus einem porösen Material gefertigt, welches zusätzlich dafür sorgt, dass keine hydraulische Entkopplung zwischen Befeuerungsraum und Rauchgaskanal erreicht wird, da das poröse Material der Decksteine keine echte Druckbarriere für die Brennerabgase darstellt.

Die GB 1 192 688 und WO 2013/087194 offenbaren weitere Reformeröfen, wobei ihre Rauchgaskanäle einen Übergangsbereich mit geringerem Durchmesser gegenüber dem Abzugsbereich aufweisen.

### Beschreibung der Erfindung

Die Aufgabe der vorliegenden Erfindung besteht darin, die vorgenannten Nachteile des Standes der Technik zumindest teilweise zu überwinden.

Insbesondere besteht eine Aufgabe der vorliegenden Erfindung darin, die Strömung der Brennerabgase innerhalb der Rauchgaskanäle des Reformerofens so gleichförmig wie möglich zu gestalten, und gleichzeitig die konstruktive Ausgestaltung der Rauchgaskanäle so einfach wie möglich zu gestalten.

Eine weitere Aufgabe der vorliegenden Erfindung besteht darin, den Rauchgaskanal oder die Rauchgaskanäle in Verbindung mit dem Befeuerungsraum derart zu gestalten, dass eine möglichst gleichmäßige Befeuerung der Reaktionsrohre durch die Brenner gewährleistet ist.

Ein Beitrag zur mindestens teilweisen Erfüllung mindestens einer der obigen Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen. Bevorzugte Ausgestaltungen von Bestandteilen einer erfindungsgemäßen Kategorie sind, soweit zutreffend, ebenso bevorzugt für gleichnamige oder entsprechende Bestandteile einer jeweils anderen erfindungsgemäßen Kategorie.

Die Ausdrücke "aufweisend", "umfassend" oder "beinhaltend" etc. schließen nicht aus, dass weitere Elemente, Inhaltsstoffe etc. enthalten sein können. Der unbestimmte Artikel "ein" schließt nicht aus, dass eine Mehrzahl vorhanden sein kann.

Die Aufgaben der vorliegenden Erfindung werden zumindest teilweise gelöst durch einen Reformerofen gemäß Anspruch 1 zur Durchführung eines endothermen Prozesses, aufweisend einen Reaktionsraum, einen Befeuerungsraum und einen mit dem Befeuerungsraum in Fluidverbindung stehenden Rauchgaskanal; wobei der Reaktionsraum durch eine Mehrzahl senkrecht angeordneter, durch den Befeuerungsraum verlaufende Reaktionsrohre gebildet wird, wobei die Reaktionsrohre im Rohrinnenraum einen Katalysator zur Umsetzung eines gasförmigen Einsatzstoffes beinhalten, wobei die Reaktionsrohre in Reihe angeordnet sind und eine oder eine Mehrzahl Reaktionsrohrreihen bilden; und wobei der Befeuerungsraum durch eine Mehrzahl von feuerfesten Wänden gebildet wird, eine erste Endfläche und eine zweite Endfläche aufweist, und eine Mehrzahl von an der ersten Endfläche angeordneten Brennern aufweist, welche in Richtung der zweiten Endfläche gerichtete Flammen erzeugen, wobei die Brenner in Reihe angeordnet sind und eine Mehrzahl von Brennerreihen bilden, wobei eine Brennerreihe zur Befeuerung der Reaktionsrohre parallel zu einer Reaktionsrohrreihe angeordnet ist; und wobei der Rauchgaskanal zum Abzug von Brennerabgasen im Bereich der zweiten Endfläche des Befeuerungsraums angeordnet ist, parallel zu den Brennerreihen und außerhalb des Befeuerungsraums verläuft. Erfindungsgemäß ist vorgesehen, dass der Rauchgaskanal einen Übergangsbereich und einen Abzugsbereich umfasst, wobei der Rauchgaskanal über den Übergangsbereich mit der zweiten Endfläche des Befeuerungsraums verbunden ist und der Übergangsbereich des Rauchgaskanals gegenüber dem Abzugsbereich des Rauchgaskanals einen verringerten Kanaldurchmesser aufweist.

Der Übergangsbereich und der Abzugsbereich sind vorzugsweise unmittelbar miteinander verbunden.

Im Zusammenhang mit Gegenständen der Erfindung bedeutet "Kanaldurchmesser" oder "Durchmesser", wenn im Zusammenhang mit Abmessungen des Übergangsbereichs oder Abzugsbereichs des Rauchgaskanals genannt, die Breite des Rauchgaskanals an der jeweiligen Stelle bei Betrachtung des Querschnitts des Rauchgaskanals an der jeweiligen Stelle in Bezug auf den von den Brennerabgasen durchströmten Bereich (Innendurchmesser). Der Übergangsbereich des Rauchgaskanals weist gegenüber dem Abzugsbereich des Rauchgaskanals einen verringerten Kanaldurchmesser auf.

Erfindungsgemäß umfasst der Rauchgaskanal einen Übergangsbereich sowie einen Abzugsbereich, wobei der Übergangsbereich einen geringeren Kanaldurchmesser im Vergleich mit dem Abzugsbereich aufweist und somit eine Engstelle zwischen dem Befeuerungsraum und dem Abzugsbereich des Rauchgaskanals erzeugt. Die von den Brennern im Bereich der ersten Endfläche des Befeuerungsraums erzeugten Brennerabgase werden in Richtung der zweiten Endfläche des Befeuerungsraums geleitet, passieren anschließend den als Engstelle ausgestalteten Übergangsbereich des Rauchgaskanals und werden daraufhin in den Abzugsbereich des Rauchgaskanals geleitet. Der Rauchgaskanal weist üblicherweise nur auf einer seiner Stirnseiten eine Öffnung auf, aus dem die Brennerabgase abgezogen und einer weiteren Verwendung, beispielsweise einer Energierückgewinnung zur Dampferzeugung, zugeführt werden können. Da die Brennerabgase in einem solchen Fall nur von einer Seite abgezogen werden, spricht man von einem asymmetrischen Abzug.

Eine bevorzugte Ausführungsform des erfindungsgemäßen Reformerofens ist dadurch gekennzeichnet, dass das Verhältnis des Kanaldurchmessers des Übergangsbereichs zum Kanaldurchmesser des Abzugsbereichs bei 1:2 bis 1:10 liegt, vorzugsweise bei 1:5 bis 1:7 liegt, und besonders bevorzugt bei 1:6 liegt.

Eine bevorzugte Ausführungsform des erfindungsgemäßen Reformerofens ist dadurch gekennzeichnet, dass der kleinste Kanaldurchmesser des Übergangsbereich geringer ist als der größte Kanaldurchmesser des Abzugsbereichs. Der Übergangsbereich weist somit zumindest an einer Stelle einen kleineren Kanaldurchmesser auf als es dem Kanaldurchmesser an der breitesten Stelle des Abzugsbereichs entspricht.

Bei von gleichmäßigen geometrischen Grundformen abweichenden konstruktiven Ausgestaltungen des Übergangsbereichs und/oder des Abzugsbereichs des Rauchgaskanals kommt der erfindungsgemäße Effekt insbesondere dann zum Tragen, wenn die vorgenannte Bedingung erfüllt ist. Der Abzugsbereich kann beispielsweise dann eine Vielzahl unterschiedlicher Kanaldurchmesser aufweisen, wenn dessen Grundform nicht einem Rechteck entspricht, sondern beispielsweise einem Trapez oder einer U-Form entspricht. Dabei wird auf den breitesten Kanaldurchmesser des Abzugsbereichs abgestellt. Entsprechend wird beim Übergangsbereich auf den schmalsten Kanaldurchmesser abgestellt, wenn dieser beispielsweise die Form eines Doppelkonus aufweist.

Insbesondere ist der Kanaldurchmesser des Übergangsbereichs somit der Durchmesser an der schmalsten Stelle des Übergangsbereichs. Insbesondere ist ferner der Kanaldurchmesser des Abzugsbereichs somit der Durchmesser an der breitesten Stelle des Abzugsbereichs. Insbesondere ist dabei der Kanaldurchmesser an der schmalsten Stelle des Übergangsbereichs um einen Faktor von mindestens 2 und höchstens 10 geringer als der Kanaldurchmesser an der breitesten Stelle des Abzugsbereichs, vorzugsweise um einen Faktor von mindestens 5 und höchstens 7 geringer, besonders bevorzugt um einen Faktor von 6 geringer.

Die Engstelle des Rauchgaskanals, das heißt der Übergangsbereich des Rauchgaskanals, stellt eine Druckbarriere zwischen dem Befeuerungsraum und dem Abzugsbereich des Rauchgaskanals dar. Insbesondere steigt der dynamische Druck im Bereich der Engstelle an, und der statische Druck sinkt gleichermaßen ab. Dadurch werden im Ergebnis große Unterschiede in Bezug auf den dynamischen Druck sowie den statischen Druck zwischen Befeuerungsraum und dem Übergangsbereich des Rauchgaskanals erzielt. Dies führt im Ergebnis zu einer hydraulischen Entkopplung zwischen Befeuerungsraum und Abzugsbereich des Rauchgaskanals. Dabei wurde überraschend festgestellt, dass dies zu einer Vergleichmäßigung der Strömungsgeschwindigkeit der Brennerabgase im Rauchgaskanal führt. Durch die hydraulische Entkopplung wird somit ein asymmetrischer Abzug der Brennerabgase aus dem Befeuerungsraum bei gleichzeitig gleichmäßigem Abzug der Brennerabgase ermöglicht. Aufwändige Konstruktionen des Rauchgaskanals selbst (beispielsweise als Keilform) oder die unterschiedliche Ausgestaltungen der einzelnen Öffnungen zwischen Befeuerungsraum und Rauchgaskanal sind somit nicht mehr erforderlich. Ferner ist auch kein symmetrischer Abzug der Brennerabgase erforderlich, bei dem die Brennerabgase von zwei Seiten über zwei stirnseitige Öffnungen im Rauchgaskanal abgezogen werden müssten, was konstruktiv aufwändiger als ein asymmetrischer Abzug ist.

Eine bevorzugte Ausführungsform der erfindungsgemäßen Reformerofens ist daher dadurch gekennzeichnet, dass der Rauchgaskanal nur eine stirnseitige Öffnung zum Abzug der Brennerabgase aufweist. Dadurch wird ein rein asymmetrischer Abzug der Brennerabgase ermöglicht.

Die Vergleichmäßigung der Strömungsgeschwindigkeit der Brennerabgase im Abzugsbereich führt in Zusammenwirkung mit der hydraulischen Entkopplung zwischen Befeuerungsraum und Abzugsbereich des Rauchgaskanals zwangsläufig auch zu einer Vergleichmäßigung der Strömungsgeschwindigkeit der Brennerabgase im Befeuerungsraum und dadurch zu einer Vergleichmäßigung der Temperaturverteilung im Befeuerungsraum. Temperaturspitzen innerhalb der Reaktorrohre, die zu einem Anstieg der Menge unerwünschter Nebenprodukte in den Reaktorrohren oder zu einem vorzeitigen Materialversagen aufgrund temperaturbedingter Materialermüdung führen, werden dadurch vermieden.

Der erfindungsgemässe Reformerofen ist dadurch gekennzeichnet, dass sich der Kanaldurchmesser des Übergangsbereichs von der zweiten Endfläche des Befeuerungsraums in Richtung des Abzugsbereichs verjüngt, insbesondere konisch verjüngt, anschließend, insbesondere über eine gewisse Länge, einen konstanten Durchmesser aufweist und sich anschließend in Richtung des Abzugsbereichs erweitert, insbesondere konisch erweitert.

Durch eine sukzessive Verjüngung und/oder Erweiterung werden weniger abrupte Übergänge in Form von beispielsweise scharfen Abrisskanten geschaffen, wodurch weniger Turbulenzen von Brennerabgasen an den Übergängen zwischen Befeuerungsraum und Übergangsbereich des Rauchgastunnels, sowie zwischen Übergangsbereich des Rauchgastunnels und Abzugsbereich des Rauchgastunnels, erzeugt werden. Dadurch wird eine weitere Vergleichmäßigung der Strömungsgeschwindigkeit der Brennerabgase innerhalb des Befeuerungsraums und des Abzugsbereichs des Rauchgastunnels bewirkt. Ferner haben die vorgenannten konstruktiven Ausgestaltungen den Vorteil, dass Lasten und Kräfte im Stahlbau aus dem Rauchgaskanal in den darunter befindlichen Feuerraum geleitet werden, wenn der Rauchgaskanal oberhalb des Befeuerungsraums des Reformerofens angeordnet ist.

Ein nicht erfindungsgemässer Reformerofen ist dadurch gekennzeichnet, dass der Abzugsbereich des Rauchgaskanals über die gesamte Kanallänge einen konstanten Durchmesser und/oder eine konstante Höhe aufweist.

Die erfindungsgemäße Ausgestaltung des Rauchgaskanals mit als Engstelle ausgestaltetem Übergangsbereich und die dadurch erzielte hydraulische Entkopplung ermöglicht es aus den vorgenannten Gründen, den Abzugsbereich des Rauchgaskanals geometrisch besonders einfach zu gestalten. Insbesondere wird dadurch ermöglicht, dass der Abzugsbereich des Rauchgaskanals über die gesamte Länge oder im Wesentlichen gesamte Länge eine konstante Höhe aufweist und/oder eine konstante Breite aufweist, das heißt im Durchmesser konstant ist. Die "gesamte Länge" bedeutet dabei die gemessene Länge von einer Stirnseite des Rauchkanals zur anderen Stirnseite, insbesondere von der geschlossenen Stirnseite zur offenen Stirnseite, welche dem Abzug der Brennerabgase bei asymmetrischem Abzug dient.

Der erfindungsgemässe Reformerofen ist dadurch gekennzeichnet, dass der Rauchgaskanal als einstückige Konstruktion ausgestaltet ist, wobei der Übergangsbereich und der Abzugsbereich des Rauchgaskanals kraftschlüssig oder stoffschlüssig miteinander verbunden sind.

Der Rauchgaskanal ist vorzugsweise als einstückige Konstruktion ausgestaltet, bei der Stahlbauteile beispielsweise durch Schweißen oder ein anderes geeignetes Fügeverfahren so miteinander verbunden werden, dass eine zumindest kraftschlüssige, oder stoffschlüssige Verbindung zwischen Übergangsbereich und Abzugsbereich erzielt wird. Zusätzlich werden die Stahlbauteile an den erforderlichen Stellen mit einem feuerfesten Material ausgekleidet. Insbesondere wird die Innenseite des Übergangsbereichs des Rauchgastunnels mit einem feuerfesten Material, beispielsweise einem abriebfesten Beton, ausgekleidet.

Eine bevorzugte Ausführungsform des erfindungsgemäßen Reformerofens ist dadurch gekennzeichnet, dass zwischen dem Abzugsbereich des Rauchgaskanals und der zweiten Endfläche des Befeuerungsraumes keine Einbauten vorgesehen sind, insbesondere keine Decksteine mit Brennerabgaszugang in Form von Schlitzen, Löchern, Drallkörpern oder Lücken vorgesehen sind.

Am Übergang zwischen Befeuerungsraum und Abzugsbereich des Rauchgaskanals, das heißt im Bereich des Übergangsbereichs des Rauchgaskanals, sind keine zusätzlichen Einbauten vorgesehen, welche den konstruktiven Aufwand bei der Ausgestaltung des Rauchgastunnels oder den des Reformerofens als Ganzem erhöhen würden. Die hydraulische Entkopplung zwischen Befeuerungsraum und Abzugsbereich des Rauchgaskanals wird vorzugsweise alleine durch den als Engstelle ausgestalteten Übergangsbereich des Rauchgaskanals bewirkt.

Eine bevorzugte Ausführungsform des erfindungsgemäßen Reformerofens ist dadurch gekennzeichnet, dass mehrere Rauchgaskanäle vorgesehen sind.

Je nachdem über wie viele Brennerreihen und Reaktionsrohrreihen der Reformerofen verfügt, ist eine Mehrzahl von Rauchgaskanälen erforderlich. Dabei sind die Rauchgaskanäle vorzugsweise parallel zueinander angeordnet und so voneinander beabstandet, dass ein optimaler Abzug der Brennerabgase gewährleistet ist.

Eine bevorzugte Ausführungsform des erfindungsgemäßen Reformerofens ist dadurch gekennzeichnet, dass das Verhältnis der Anzahl an Rauchgaskanälen zur Anzahl an Brennerreihen bei 1:1 bis 1:4 liegt, bevorzugt bei 1:2 oder 1:3 liegt, besonders bevorzugt bei 1:3 liegt.

Aufgrund der hydraulischen Entkopplung zwischen Abzugsbereich des Rauchgaskanals und Befeuerungsraum ist es erstmals möglich, die Brennerabgase von mehr als einer Brennerreihe durch nur einen einzigen Rauchgaskanal aus dem Reformerofen abzuziehen. Bevorzugt kommt ein Rauchgaskanal pro zwei oder drei Brennerreihen zum Einsatz, besonders bevorzugt ein Rauchgaskanal pro drei Brennerreihen. Werden weniger Rauchgaskanäle als Brennerreihen benötigt, vereinfacht das die Konstruktion des Reformerofens beträchtlich, beispielsweise in Hinblick auf die an die Stahlkonstruktion zu stellenden Anforderungen.

Eine bevorzugte Ausführungsform des erfindungsgemäßen Reformerofens ist dadurch gekennzeichnet, dass die erste Endfläche des Befeuerungsraums und die Brenner unten angeordnet sind und die zweite Endfläche des Befeuerungsraums und der Rauchgaskanal oben angeordnet sind, wobei die Brenner nach oben gerichtete Flammen erzeugen. Gemäß dieser Ausführungsform steigen die heißen Brennerabgase konvektiv von unten nach oben und erhöhen so den Druck auf die zweite Endfläche, was zu einer weiter verbesserten Druckentkopplung oder hydraulischen Entkopplung zwischen Abzugsbereich und Befeuerungsraum über die Engstelle (Übergangsbereich) des Rauchgaskanals führt.

Bei bestimmten Ausgestaltungen von Reformeröfen ist es nicht möglich, dass die sogenannte Konvektionszone, welche den Bereich der Wärmerückgewinnung aus den Brennerabgasen darstellt, auf dem Befeuerungsraum platziert werden kann. Dies ist dann der Fall, wenn die Konvektionszone zu groß ist, zu schwer ist, eine komplizierte Verschaltung von Wärmeaustauschern erforderlich wäre, eine hohe Luftvorwärmung erforderlich wäre oder beispielsweise zusätzlich Gebläse installiert werden müssten. In einem solchen Fall sind die Rauchgaskanäle oberhalb des Befeuerungsraums angeordnet, so dass die Konvektionszone vorzugsweise neben dem Reformerofen, auf der offenen Stirnseite der Rauchgaskanäle, platziert werden kann.

Eine bevorzugte Ausführungsform des erfindungsgemäßen Reformerofens ist dadurch gekennzeichnet, dass eine Zuführung für den gasförmigen Einsatzstoff sowie eine Abführung für das Reaktionsprodukt des endothermen Prozesses jeweils am unteren Ende eines Reaktionsrohres angeordnet sind.

Gemäß dieser Ausführungsform sind die Innenbereiche der Reaktionsrohre derart gestaltet, dass sowohl Eduktgaszuführung als auch Produktgasabführung auf der gleichen Seite eines Reaktionsrohres angeordnet sind. In diesem Fall wird das Eduktgas mit Prozessdampf vermischt, durch die Katalysatorrohre des Reformers geleitet und anschließend durch den Wärmeaustausch mit Prozessgasen in den Rohren intern gekühlt. Durch die Anordnung von Eduktgaszuführung und Produktgasabführung auf der gleichen Seite der Reaktionsrohre wird die konstruktive Ausgestaltung des Reformerofens insbesondere dann vereinfacht, wenn die die erste Endfläche des Befeuerungsraums und die Brenner unten angeordnet sind und die zweite Endfläche des Befeuerungsraums und der Rauchgaskanal oben angeordnet sind, wobei die Brenner nach oben gerichtete Flammen erzeugen.

Alternativ kann auch in vorteilhafter und konstruktiv vereinfachender Weise vorgesehen sein, dass eine Zuführung für den gasförmigen Einsatzstoff sowie eine Abführung für das Reaktionsprodukt des endothermen Prozesses jeweils am oberen Ende eines Reaktionsrohres angeordnet sind und die erste Endfläche des Befeuerungsraums und die Brenner oben angeordnet sind und die zweite Endfläche des Befeuerungsraums und der Rauchgaskanal unten angeordnet sind, wobei die Brenner nach unten gerichtete Flammen erzeugen.

Eine bevorzugte Ausführungsform des erfindungsgemäßen Reformerofens ist dadurch gekennzeichnet, dass das Verhältnis der Höhe des Übergangsbereichs zur Höhe des Abzugsbereichs des Rauchgaskanals bei 1:1 bis 5:1 liegt, vorzugsweise bei 1,5:1 bis 3:1 liegt, und besonders bevorzugt bei 2:1 liegt.

Aufgrund der hydraulischen Entkopplung zwischen Befeuerungsraum und Abzugsbereich des Rauchkanals kann der Übergangsbereich des Rauchgaskanals im Prinzip beliebig hoch gestaltet werden, das heißt der Abstand zwischen zweiter Endfläche des Befeuerungsraums und Abzugszone kann beliebig lang gestaltet werden, so lange der absolute Druckverlust durch die Länge dieser Strecke keinen bestimmten Grenzwert obersteigt. Dies führt zu weiteren konstruktiven Variationsmöglichkeiten, da durch den weniger breiten, das heißt engeren Übergangsbereich Freiraum in diesem Bereich geschaffen wird, der durch andere externe Einbauten, Zuleitungen und anderes genutzt werden kann.

Die Aufgaben der Erfindung werden ferner zumindest teilweise gelöst durch die Verwendung eines erfindungsgemäßen Reformerofens zur Herstellung von Synthesegas aus einem kohlenstoffhaltigen Einsatzstoff, insbesondere Erdgas.

### Beispiel

Die Erfindung wird im Folgenden durch ein Ausführungsbeispiele näher erläutert. In der folgenden detaillierten Beschreibung des Ausführungsbeispiels wird auf die beigefügten Zeichnungen verwiesen, die einen Teil davon bilden und in denen illustrativ spezifische Ausführungsformen der Erfindung dargestellt sind. In diesem Zusammenhang wird richtungsspezifische Terminologie wie "oben", "unten", "vorne", "hinten" usw. in Bezug auf die Ausrichtung der beschriebenen Figur(en) verwendet. Da Komponenten von Ausführungsformen in einer Vielzahl von Ausrichtungen positioniert werden können, dient die richtungsspezifische Terminologie zur Veranschaulichung und ist in keiner Weise limitierend. Der Fachmann ist sich darüber im Klaren, dass andere Ausführungsformen verwendet werden können und strukturelle oder logische Änderungen vorgenommen werden können, ohne vom Schutzumfang der Erfindung abzuweichen. Die folgende detaillierte Beschreibung ist daher nicht in einem einschränkenden Sinne zu verstehen, und der Schutzumfang der Ausführungsformen wird durch die beigefügten Ansprüche definiert. Die Zeichnungen sind, soweit nicht anders angegeben, nicht maßstabsgetreu.

Es zeigt
- Figur 1: eine vereinfachte Darstellung der Querschnittsansicht eines erfindungsgemäßen Reformerofens 10 von der Vorderseite aus betrachtet,
- Figur 2: eine Querschnittsansicht des gleichen erfindungsgemäßen Reformerofens 10 von der Seite aus betrachtet und die
- Figuren 3a bis 3d: vier verschiedene Ausführungsformen eines

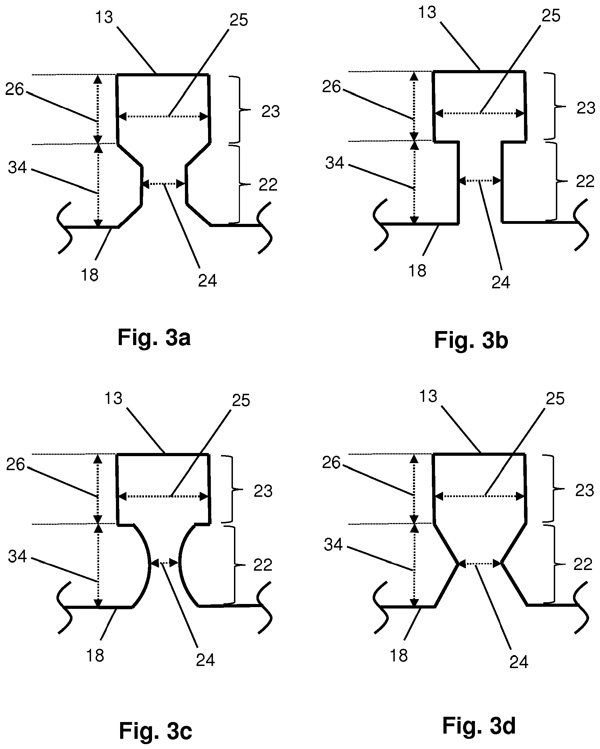

Rauchgastunnels mit Ubergangsbereich und Abzugsbereich. Nur die Figur 3a stellt eine erfindungsgemässe Ausführung eines Rauchgastunnels dar.

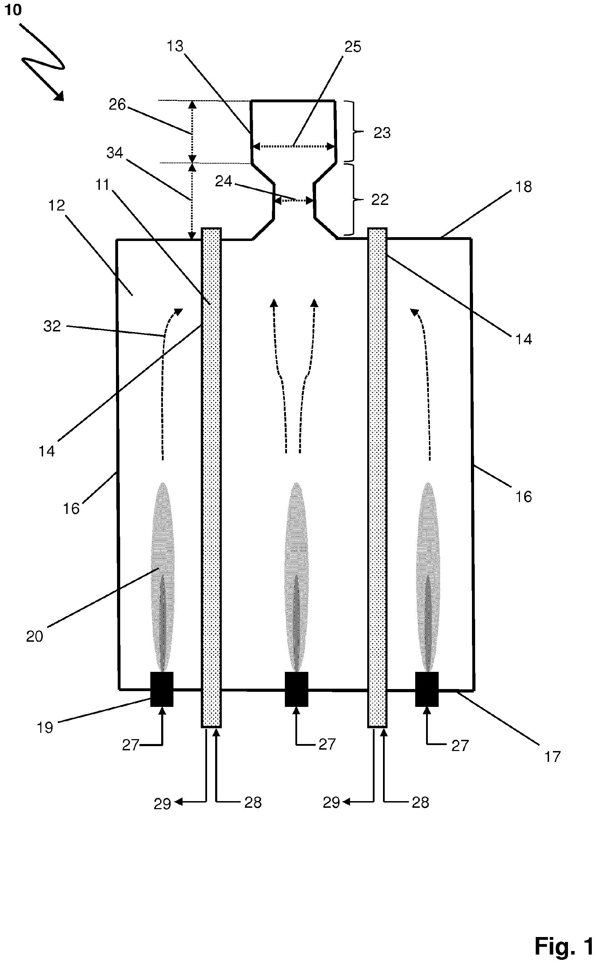

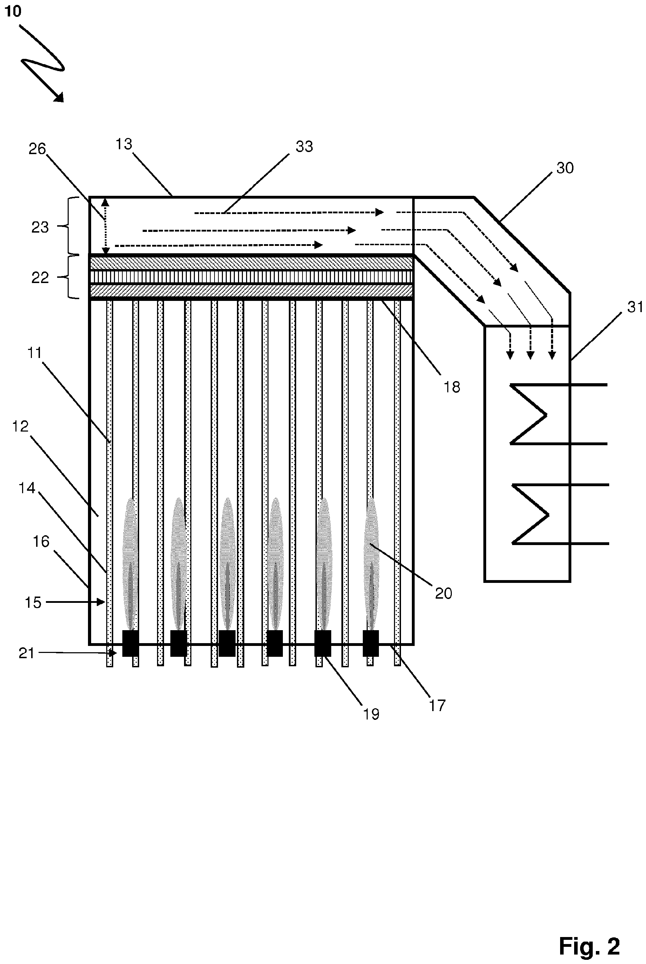

In der seitlichen Ansicht gemäß Figur 2 verlaufen die durch die Brenner 19 und Reaktionsrohre 14 gebildeten Brennerreihen 21 und Reaktionsrohrreihen 15 in der Zeichenebene. Der Rauchgastunnel 13 erstreckt sich dem entsprechend in der Zeichenebene der Darstellung. In der Vorderansicht gemäß Figur 1 ist der erfindungsgemäße Reformerofen 10 um 90 Grad gedreht, entsprechend würden die Brennerreihen 21 und Reaktionsrohrreihen 15 aus der Zeichenebene herausragen und sich der Rauchgastunnel 13 aus der Zeichenebene heraus erstrecken.

Der Reformerofen 10 gemäß Figur 1 weist eine Mehrzahl von Reaktionsrohren 14 auf, welche mit einem Katalysator, beispielsweise in Form von Pellets, Tabletten, Formkörpern oder als strukturierter Packung (monolithische Form), gefüllt ist. Bei dem Katalysator kann es sich beispielsweise um einen Nickel basierten Katalysator zur Dampfreformierung von Erdgas zur Erzeugung von Synthesegas handeln. Die Reaktionsrohre sind senkrecht angeordnet und erstrecken sich vollständig durch den Befeuerungsraum 12 des Reformerofens 10. Die Reaktionsrohre 14 sind im Fall des Reformerofens 10 der Figur 1 in zwei Reaktionsrohrreihen 15 angeordnet. Die Reihenanordnung wird durch die Darstellung der Figur 2 verdeutlicht, wobei aufgrund der Querschnittsdarstellung der Figur 2 nur eine der beiden Reaktionsrohrreihen 15 dargestellt ist. Die Gesamtheit der Innenräume der Reaktionsrohre 14 bildet den Reaktionsraum 11 des Reformerofens 10, wobei dieser Reaktionsraum durch die Wandungen der Reaktionsrohre vom Befeuerungsraum 12 räumlich getrennt ist. Die Reaktionsrohre 14 verfügen jeweils an ihrer unteren Seite über eine Eduktgaszuführung 28, beispielsweise zur Zuführung von Erdgas und Dampf, sowie eine Produktgasabführung 29, beispielsweise zur Abführung von Synthesegas. Der Innenraum der Reaktionsrohre ist somit derart ausgestaltet, dass das Eduktgas auf der gleichen Seite zugeführt werden kann, auf der auch das Produktgas abgezogen wird.

Der Befeuerungsraum 12 wird durch mehrere feuerfeste Wände 16 sowie eine erste Endfläche 17 und eine zweite Endfläche 18 gebildet. Die beiden Endflächen 17 und 18 sind ebenfalls als feuerfeste Wände ausgestaltet. An der ersten Endfläche 17 sind Brenner 19 angeordnet, welche senkrecht nach oben, in Richtung der zweiten Endfläche gerichtete Flammen 20 erzeugen. Die Brenner 19 sind in drei Brennerreihen 21 angeordnet, wie aus Figur 2 ersichtlich. Dabei bilden die Brenner 19 der linken und rechten Brennerreihe 21 gemäß Figur 1 die wandständigen Brenner, welche die rechts beziehungsweise links von diesen Brennern angeordneten Reaktionsrohrreihen 15 befeuern. Die in der Mitte gemäß Figur 1 angeordneten Brenner 19 bilden eine nicht wandständige Brennerreihe 21, wobei diese Brenner links sowie rechts davon angeordneten Reaktionsrohrreihen 15 befeuern. Jeder Brenner verfügt über eine Gaszuführung 27 zur Zuführung von Brennstoff und (Luft-)Sauerstoff.

Ein Rauchgaskanal 13 zum Abzug der Brennerabgase der Brenner 19 steht in Fluidverbindung mit dem Befeuerungsraum 12 und ist im Bereich der zweiten Endfläche 18 des Reformerofens angeordnet. Der Rauchgaskanal 13 verfügt über einen Übergangsbereich 22 sowie einen Abzugsbereich 23, wobei beide Bereiche unmittelbar miteinander verbunden sind. Der Rauchgaskanal 13 ist über den Übergangsbereich 22 mit der zweiten Endfläche 18 verbunden. Der Übergangsbereich 22 des Rauchgaskanals weist einen verringerten Kanaldurchmesser 24 gegenüber dem Kanaldurchmesser 25 des Abzugsbereichs 23 auf. Dabei ist der Kanaldurchmesser 24 des Übergangsbereichs der geringste Kanaldurchmesser des Übergangsbereichs. Der Kanaldurchmesser 25 des Abzugsbereichs 23 ist aufgrund der rechteckigen Grundform des Abzugsbereichs über die gesamte Höhe 26 des Abzugsbereichs konstant. Das gleiche gilt für die Höhe 26 Abzugsbereichs 23, welche über die gesamte Länge des Rauchgaskanals konstant ist, wie in der Seitenansicht gemäß Figur 2 zu erkennen.

Aufgrund des verringerten Kanaldurchmessers 24 des Übergangsbereichs 22 weist der Rauchgastunnel 13 im Bereich des Übergangsbereichs 22 eine Engstelle auf, welche im Ergebnis dazu führt, dass der Befeuerungsraum 12 vom Abzugsbereich 23 des Rauchgastunnels 13 hydraulisch entkoppelt ist. Die hydraulische Entkopplung zwischen Abzugsbereich 23 und Befeuerungsraum 12 führt dazu, dass die Brennerabgase 32 (angedeutet durch die gestrichelten Pfeile) im Bereich des Befeuerungsraums 12 bei Abziehen aus diesem Befeuerungsraum 12 eine gleichmäßige Strömungsgeschwindigkeit aufweisen. Gleichzeitig sind dadurch auch die Strömungsgeschwindigkeiten der Brennerabgase 33 im Abzugsbereich 23 des Rauchgastunnels 13 vergleichmäßigt.

Im Beispiel der Figur 1 und 2 liegt das Verhältnis des Kanaldurchmessers 24 des Übergangsbereichs zum Kanaldurchmesser 25 des Abzugsbereichs bei 1:6. Der Übergangsbereich kann im Prinzip beliebig "lange" ausgestaltet werden, das heißt die Höhe 34 des Übergangsbereichs 22 kann einen großen Wert im Vergleich zur Höhe 26 des Abzugsbereichs annehmen. Im vorliegenden Beispiel liegt das Verhältnis der Höhe 34 zum Verhältnis der Höhe 26 bei 1:2.

Der Übergangsbereich 22 verjüngt sich zunächst konisch von der zweiten Endfläche 18 aus in Richtung Abzugsbereich 23, weist anschließend über eine bestimmte Länge einen konstanten Kanaldurchmesser 24 auf und erweitert sich anschließend konisch in Richtung des Abzugsbereichs 23, und mündet anschließend im Abzugsbereich, welcher wiederum einen konstanten Kanaldurchmesser 25 aufweist. Die konische Verjüngung, der konstante Bereich sowie die konische Erweiterung des Übergangsbereichs 22 sind in Figur 2 durch unterschiedlich schraffierte Flächen dargestellt.

Der Rauchgaskanal 13 ist auf einer seiner Stirnseiten geschlossen und mündet auf der offenen Stirnseite in einen Rauchgastunnelübergang 30, der wiederum in der Wärmerückgewinnungszone 31 mündet.

Der Reformerofen 10 weist insgesamt drei Brennerreihen 21 und zwei Reaktionsrohrreihen 15 auf, jedoch nur einen einzigen Rauchgastunnel 13 zum Abzug der Brennerabgase 32 der Brenner 19 der drei Brennerreihen 21. Das Verhältnis der Anzahl der Brennerreihen 21 zur Anzahl der Rauchgastunnel 13 liegt im Beispiel der Figuren 1 und 2 somit bei drei zu eins. Dieses hohe Verhältnis wird durch die hydraulische Entkopplung zwischen Befeuerungsraum 12 und Abzugsbereich 23 ermöglicht. Die Verwendung nur eines einzigen Rauchgastunnels für drei Brennerreihen vereinfacht die Konstruktion des Reformerofens 10 erheblich.

Die Figuren 3a bis 3d stellen unterschiedliche Rauchgaskanäle 13 mit Ubergangsbereich 22 und Abzugsbereich 23 dar. Die Figuren zeigen jeweils den Rauchgaskanal 13 im Querschnitt, verbunden mit der zweiten Endfläche 18, welche nur teilweise dargestellt ist. Ferner sind die Kanaldurchmesser 25 des Abzugsbereichs, die Kanaldurchmesser des Übergangsbereichs 24, die Höhen 26 des Abzugsbereichs sowie die Höhen 34 des Übergangsbereichs gezeigt. In allen vier Fällen der Figuren 3a bis 3d weist der Abzugsbereich 23 einen rechteckigen Querschnitt mit konstanter Höhe 26 auf.

Der Rauchgaskanal 13 gemäß Figur 3a entspricht in seiner Ausgestaltung der Ausgestaltung des erfindungsgemässen Rauchgaskanals gemäß der Figuren 1 und 2. Der Ubergangsbereich 22 des Rauchgaskanals 13 gemäß Figur 3a ist als Doppelkonus mit geradem Zwischenstück ausgestaltet, wobei sich der Durchmesser des Doppelkonus von der zweiten Endfläche 18 aus in Richtung des Abzugsbereichs zunächst linear verjüngt, bis der Kanaldurchmesser 24 am engsten Punkt des Doppelkonus erreicht ist, dann über eine gewisse Länge einen konstanten Durchmesser aufweist, welcher dem Kanaldurchmesser 24 des Übergangsbereichs entspricht, und sich anschließend weiter in Richtung des Abzugsbereichs linear verbreitert, und anschließend in den Abzugsbereich übergeht.

Der Übergangsbereich 22 des Rauchgaskanals 13 gemäß der Figur 3b weist über die gesamte Höhe 24 einen konstanten Kanaldurchmesser 24 auf.

Der Übergangsbereich 22 des Rauchgaskanals 13 gemäß Figur 3c ist als um seine Längsachse symmetrischer Rotationskörper ausgestaltet, wobei sich der Durchmesser des Rotationskörpers von der zweiten Endfläche 18 aus in Richtung des Abzugsbereichs zunächst parabelartig verjüngt, bis der Kanaldurchmesser 24 am Scheitelpunkt der Parabel erreicht ist, und sich anschließend weiter in Richtung des Abzugsbereichs parabelartig verbreitert, und anschließend in den Abzugsbereich übergeht.

Der Übergangsbereich 22 des Rauchgaskanals 13 gemäß Figur 3d ist als Doppelkonus ausgestaltet, wobei sich der der Durchmesser des Doppelkonus von der zweiten Endfläche 18 aus in Richtung des Abzugsbereichs zunächst linear verjüngt, bis der Kanaldurchmesser 24 am engsten Punkt des Doppelkonus erreicht ist, und sich anschließend weiter in Richtung des Abzugsbereichs linear verbreitert, und anschließend in den Abzugsbereich übergeht.

### Bezugszeichenliste

- 10: Reformerofen
- 11: Reaktionsraum
- 12: Befeuerungsraum
- 13: Rauchgaskanal
- 14: Reaktionsrohr
- 15: Reaktionsrohrreihe
- 16: Feuerfeste Wand
- 17: Erste Endfläche
- 18: Zweite Endfläche
- 19: Brenner
- 20: Flamme
- 21: Brennerreihe
- 22: Übergangsbereich des Rauchgaskanals
- 23: Abzugsbereich des Rauchgaskanals
- 24: Kanaldurchmesser Übergangsbereich
- 25: Kanaldurchmesser Abzugsbereich
- 26: Höhe Abzugsbereich
- 27: Gaszuführung Brenner
- 28: Eduktgaszuführung
- 29: Produktgasabführung
- 30: Rauchgastunnelübergang
- 31: Wärmerückgewinnungszone
- 32: Brennerabgase
- 33: Brennerabgase
- 34: Höhe Übergangsbereich

## Patentansprüche

1. Reformerofen (10) zur Durchführung eines endothermen Prozesses, aufweisend
einen Reaktionsraum (11), einen Befeuerungsraum (12) und einen mit dem Befeuerungsraum in Fluidverbindung stehenden Rauchgaskanal (13); wobei der Reaktionsraum durch eine Mehrzahl senkrecht angeordneter, durch den Befeuerungsraum verlaufende Reaktionsrohre (14) gebildet wird, wobei die Reaktionsrohre im Rohrinnenraum einen Katalysator zur Umsetzung eines gasförmigen Einsatzstoffes beinhalten, wobei
die Reaktionsrohre in Reihe angeordnet sind und eine oder eine Mehrzahl Reaktionsrohrreihen (15) bilden; und wobei
der Befeuerungsraum durch eine Mehrzahl von feuerfesten Wänden (16) gebildet wird, eine erste Endfläche (17) und eine zweite Endfläche (18) aufweist, und eine Mehrzahl von an der ersten Endfläche angeordneten Brennern (19) aufweist, welche in Richtung der zweiten Endfläche gerichtete Flammen (20) erzeugen, wobei
die Brenner in Reihe angeordnet sind und eine Mehrzahl von Brennerreihen (21) bilden, wobei
eine Brennerreihe zur Befeuerung der Reaktionsrohre parallel zu einer Reaktionsrohrreihe angeordnet ist; und wobei
der Rauchgaskanal zum Abzug von Brennerabgasen (32) im Bereich der zweiten Endfläche des Befeuerungsraums angeordnet ist, parallel zu den Brennerreihen und außerhalb des Befeuerungsraums verläuft,
der Rauchgaskanal einen Übergangsbereich (22) und einen Abzugsbereich (23) umfasst, wobei der Rauchgaskanal über den Übergangsbereich mit der zweiten Endfläche des Befeuerungsraums verbunden ist und der Übergangsbereich des Rauchgaskanals gegenüber dem Abzugsbereich des Rauchgaskanals einen verringerten Kanaldurchmesser aufweist,
**dadurch gekennzeichnet, dass**
der Rauchgaskanal als einstückige Konstruktion ausgestaltet ist, wobei der Übergangsbereich und der Abzugsbereich des Rauchgaskanals kraftschlüssig oder stoffschlüssig miteinander verbunden sind, und
sich der Kanaldurchmesser des Übergangsbereichs von der zweiten Endfläche des Befeuerungsraums in Richtung des Abzugsbereichs verjüngt, anschließend einen konstanten Durchmesser aufweist und sich anschließend in Richtung des Abzugsbereichs erweitert.

2. Reformerofen nach Anspruch 1, **dadurch gekennzeichnet, dass** das Verhältnis des Kanaldurchmessers des Übergangsbereichs zum Kanaldurchmesser des Abzugsbereichs bei 1:2 bis 1:10 liegt, vorzugsweise bei 1:5 bis 1:7 liegt, und besonders bevorzugt bei 1:6 liegt.

3. Reformerofen nach einem der Ansprüche 1 bis 2, **dadurch gekennzeichnet, dass** der Abzugsbereich des Rauchgaskanals über die gesamte Kanallänge einen konstanten Durchmesser (25) und/oder eine konstante Höhe (26) aufweist.

4. Reformerofen nach einem der Ansprüche 1 bis 3, **dadurch gekennzeichnet, dass** zwischen dem Abzugsbereich des Rauchgaskanals und der zweiten Endfläche des Befeuerungsraumes keine Einbauten vorgesehen sind, insbesondere keine Decksteine mit Brennerabgaszugang in Form von Schlitzen, Löchern, Drallkörpern oder Lücken vorgesehen sind.

5. Reformerofen nach einem der Ansprüche 1 bis 4, **dadurch gekennzeichnet, dass** mehrere Rauchgaskanäle vorgesehen sind.

6. Reformerofen nach Anspruch 5, **dadurch gekennzeichnet, dass** das Verhältnis der Anzahl an Rauchgaskanälen zur Anzahl an Brennerreihen bei 1:1 bis 1:4 liegt, bevorzugt bei 1:2 oder 1:3 liegt, besonders bevorzugt bei 1:3 liegt.

7. Reformerofen nach einem der Ansprüche 1 bis 6, **dadurch gekennzeichnet, dass** die erste Endfläche des Befeuerungsraums und die Brenner unten angeordnet sind und die zweite Endfläche des Befeuerungsraums und der Rauchgaskanal oben angeordnet sind, wobei die Brenner nach oben gerichtete Flammen erzeugen.

8. Reformerofen nach Anspruch 7, **dadurch gekennzeichnet, dass** eine Zuführung für den gasförmigen Einsatzstoff sowie eine Abführung für das Reaktionsprodukts des endothermen Prozesses jeweils am unteren Ende eines Reaktionsrohres angeordnet sind.

9. Reformerofen nach einem der Ansprüche 1 bis 8, **dadurch gekennzeichnet, dass** das Verhältnis der Höhe des Übergangsbereichs zur Höhe des Abzugsbereichs des Rauchgaskanals bei 1:1 bis 5:1 liegt, vorzugsweise bei 1,5:1 bis 3:1 liegt, und besonders bevorzugt bei 2:1 liegt.

10. Verwendung eines Reformerofens nach einem der Ansprüche 1 bis 9 zur Herstellung von Synthesegas aus einem kohlenstoffhaltigen Einsatzstoff, insbesondere Erdgas.

## Claims

1. Reformer furnace (10) for performing an endothermic process, comprising
a reaction space (11), a firing space (12) and a flue gas channel (13) in fluid connection with the firing space; wherein
the reaction space is formed by a plurality of vertical reaction tubes (14) passing through the firing space, wherein the reaction tubes comprise in the tube interior a catalyst for converting a gaseous input material, wherein
the reaction tubes are arranged in line and form one or more reaction tube rows (15); and wherein
the firing space is formed by a plurality of refractory walls (16), comprises a first end face (17) and a second end face (18) and
comprises a plurality of burners (19) arranged at the first end face which produce flames (20) oriented in the direction of the second end face, wherein
the burners are arranged in line and form a plurality of burner rows (21), wherein
a burner row for firing the reaction tubes is arranged parallel to a reaction tube row; and wherein
the flue gas channel for withdrawing burner offgases (32) is arranged in the region of the second end face of the firing space and runs parallel to the burner rows and outside the firing space,
the flue gas channel has a transition region (22) and a withdrawal region (23), wherein the flue gas channel is connected to the second end face of the firing space via the transition region and the transition region of the flue gas channel has a reduced channel diameter compared to the withdrawal region of the flue gas channel,
**characterized in that**
the flue gas channel is in the form of a one-piece construction, wherein the transition region and the withdrawal region of the flue gas channel are joined to one another with a mechanical or atomic-level join and the channel diameter of the transition region narrows from the second end face of the firing space in the direction of the withdrawal region, subsequently has a constant diameter and subsequently widens in the direction of the withdrawal region.

2. Reformer furnace according to Claim 1, **characterized in that** the ratio of the channel diameter of the transition region to the channel diameter of the withdrawal region is 1:2 to 1:10, preferably 1:5 to 1:7 and particularly preferably 1:6.

3. Reformer furnace according to either of Claims 1 to 2, **characterized in that** the withdrawal region of the flue gas channel has a constant diameter (25) and/or a constant height (26) over the entire channel length.

4. Reformer furnace according to any of Claims 1 to 3, **characterized in that** no internals, in particular no cover slabs provided with means of burner offgas entry in the form of slots, holes, swirl plates or gaps, are provided between the withdrawal region of the flue gas channel and the second end face of the firing space.

5. Reformer furnace according to any of Claims 1 to 4, **characterized in that** a plurality of flue gas channels are provided.

6. Reformer furnace according to Claim 5, **characterized in that** the ratio of the number of flue gas channels to the number of burner rows is 1:1 to 1:4, preferably 1:2 or 1:3, particularly preferably 1:3.

7. Reformer furnace according to any of Claims 1 to 6, **characterized in that** the first end face of the firing space and the burners are arranged at the bottom and the second end face of the firing space and the flue gas channel are arranged at the top, wherein the burners produce upwardly oriented flames.

8. Reformer furnace according to Claim 7, **characterized in that** a feed for the gaseous input material and a discharge for the reaction product of the endothermic process are each arranged at the bottom end of a reaction tube.

9. Reformer furnace according to any of Claims 1 to 8, **characterized in that** the ratio of the height of the transition region to the height of the withdrawal region of the flue gas channel is 1:1 to 5:1, preferably 1.5:1 to 3:1 and particularly preferably 2:1.

10. Use of a reformer furnace according to any of Claims 1 to 9 for producing synthesis gas from a carbon-containing input material, in particular natural gas.

## Revendications

1. Four de reformage (10) destiné à effectuer un processus endothermique, ledit four comportant un espace de réaction (11), un espace de chauffage (12) et un conduit de gaz de fumée (13) qui est relié fluidiquement à l'espace de chauffage ; l'espace de réaction étant formé par une pluralité de tubes de réaction (14) qui sont disposés verticalement et qui traversent l'espace de chauffage, les tubes de réaction contenant un catalyseur destiné à la conversion d'une matière de charge gazeuse dans l'espace intérieur des tubes,
les tubes de réaction étant disposés en série et formant une rangée, ou une pluralité de rangées, de tubes de réaction (15) ; et
l'espace de chauffage étant formé par une pluralité de parois réfractaires (16), comportant une première surface d'extrémité (17) et une deuxième surface d'extrémité (18), et comportant une pluralité de brûleurs (19) qui sont disposés sur la première surface d'extrémité et qui produisent des flammes (20) orientées en direction de la deuxième surface d'extrémité,
les brûleurs étant disposés en série et formant une pluralité de rangées de brûleurs (21),
une rangée de brûleurs étant disposée parallèlement à une rangée de tubes de réaction de façon à chauffer les tubes de réaction ; et
le conduit de gaz de fumée étant disposé dans la zone de la deuxième surface d'extrémité de la chambre de chauffage et s'étendant parallèlement aux rangées de brûleurs et à l'extérieur de la chambre de chauffage, afin d'évacuer les gaz d'échappement de brûleurs (32), le conduit de gaz de fumée comprenant une zone de transition (22) et une zone d'évacuation (23), le conduit de gaz de fumée étant relié à la deuxième surface d'extrémité de la chambre de chauffage par le biais de la zone de transition et la zone de transition du conduit de gaz de fumée ayant un diamètre de conduit réduit par rapport à la zone d'extraction du conduit de gaz de fumée,
**caractérisé en ce que**
le conduit de gaz de fumée est conçu comme une construction monobloc, la zone de transition et la zone d'évacuation du conduit de gaz de fumée étant reliées l'une à l'autre par liaison en force ou de matière, et le diamètre de conduit de la zone de transition se rétrécit depuis la deuxième surface d'extrémité de l'espace de chauffage en direction de la zone d'évacuation, puis a un diamètre constant et ensuite s'élargit en direction de la zone d'évacuation.

2. Four de reformage selon la revendication 1, **caractérisé en ce que** le rapport du diamètre de conduit de la zone de transition au diamètre de conduit de la zone d'évacuation est de 1:2 à 1:10, de préférence de 1:5 à 1:7, et de manière particulièrement préférée de 1:6.

3. Four de reformage selon l'une des revendications 1 à 2, **caractérisé en ce que** la zone d'évacuation du conduit de fumées présente un diamètre constant (25) et/ou une hauteur constante (26) sur toute la longueur du conduit.

4. Four de reformage selon l'une des revendications 1 à 3, **caractérisé en ce qu'**aucun élément encastré, notamment aucune brique de couronnement avec accès de gaz d'échappement de brûleurs sous la forme de fentes, de trous, de corps de giration ou d'interstices, n'est prévu entre la zone d'évacuation du conduit de gaz de fumée et la deuxième surface d'extrémité de l'espace de chauffage.

5. Four de reformage selon l'une des revendications 1 à 4, **caractérisé en ce que** plusieurs conduits de gaz de fumée sont prévus.

6. Four de reformage selon la revendication 5, **caractérisé en ce que** le rapport du nombre de conduits de gaz de fumée au nombre de rangées de brûleurs est de 1:1 à 1:4, de préférence de 1:2 ou 1:3, de manière particulièrement préférée de 1:3.

7. Four de reformage selon l'une des revendications 1 à 6, **caractérisé en ce que** la première surface d'extrémité de l'espace de chauffage et les brûleurs sont disposés en bas et la deuxième surface d'extrémité de l'espace de chauffage et le conduit de gaz de fumée sont disposés en haut, les brûleurs produisant des flammes orientées vers le haut.

8. Four de reformage selon la revendication 7, **caractérisé en ce qu'**une alimentation en matière de charge gazeuse et une évacuation du produit de réaction du processus endothermique sont disposées chacune à l'extrémité inférieure d'un tube de réaction.

9. Four de reformage selon l'une des revendications 1 à 8, **caractérisé en ce que** le rapport de la hauteur de la zone de transition à la hauteur de la zone d'évacuation du conduit de gaz de fumée est de 1:1 à 5:1, de préférence de 1,5:1 à 3:1 et de manière particulièrement préférée de 2:1.

10. Utilisation d'un four de reformage selon l'une des revendications 1 à 9 pour produire un gaz de synthèse à partir d'une matière de charge carbonée, notamment de gaz naturel.
